# EUROPEAN PATENT SPECIFICATION

(11) **EP 2 353 931 B1**
(45) Date of publication and mention of the grant of the patent: **14.11.2018**
(21) Application number: 11151040.0
(22) Date of filing: 14.01.2011
(51) Int. Cl.: B60R 11/00, B64D 11/06, B60N 3/00, B60N 2/02

(54) **Seating unit with tray assembly**
Sitzeinheit mit Klapptischanordnung
Unité de siège dotée d'un ensemble formant table

(30) Priority: 15.01.2010 GB 201000666
(43) Date of publication of application: 10.08.2011
(73) Proprietor: Thompson Aero Seating Limited, Portadown, Armagh BT63 5QE (GB)
(72) Inventor: Thompson, James, Kilkeel, Down BT34 4SR (GB); Mulholland, Seamus, Lurgan, Armagh BT56 6LG (GB)
(74) Representative: FRKelly

(56) References cited:
- WO-A1-2008/141829
- WO-A2-2009/052596
- DE-C1- 19 954 930
- GB-A- 443 145

## Description

### FIELD OF THE INVENTION

The present invention relates to trays for vehicle seats. More particularly, the invention relates to tray assemblies that are deployable from a console or armrest adjacent a seat.

### BACKGROUND TO THE INVENTION

Seating systems provided for passengers in a variety of vehicles sometimes incorporate a deployable tray assembly to allow the passenger to conveniently consume food and drinks, or for use as a support surface for reading, writing or any number of other activities. A common form of meal tray can be seen where seats are arranged in line and in successive rows where the tray is hinged (directly or indirectly) from the rear structure of a forward seat and is stowed against the back surface of the seat when not in use. For some seats where the longitudinal (fore-and-aft) spacing of the seat rows is large, or where the seats in successive rows are not directly in line with each other a different arrangement is required. This has been most commonly provided by attaching the tray to an arm or bracket which is arranged so that the tray can be moved from its operating position in front of the passenger to a stowed position within an adjacent armrest or console. The movement required to stow the tray is usually a rotation of 90° about a longitudinal axis close to the edge of the tray close to the armrest, so that the top surface is vertically disposed and facing away from the passenger, followed by either a rotational or sliding generally downwards movement to move the tray and support arm into a suitable cavity within the armrest, wherein the tray is stowed in a vertical orientation. The required opening at the top of the cavity is usually covered by a hinged lid, which can also perform the function of an armrest when it is closed.

More recently there have been seat systems developed, particularly for use in aircraft, where the passengers in successive seat rows are offset laterally with respect to the passengers in the rows ahead and behind. When this offset is combined with an increase in width of the armrest or console between or beside the passenger it is possible to design a seat system which uses the space underneath the armrest or console of a forward seat as a footwell into which the forward extremities of a seat and passenger may be moved when the seat is reclined, e.g. so as to form a substantially flat bed. Where the space under the armrest or console is used in this way it is not usually feasible to arrange for a conventional vertically stowed in-arm tray. A solution to this problem is to stow the meal tray with the main tray surface horizontal, in an enclosure mounted on top of the armrest or console. The tray may be deployed by being moved in a horizontal plane from a stowed position under a fixed console lid, or by being rotated 180° about a longitudinal axis after opening a console lid that is hinged on one side. These solutions have the virtue of presenting the tray at a suitable height for use by the passenger but have the disadvantage of increasing the height of the console or armrest. This can be detrimental to passenger comfort and in some cases may restrict the available width of the seat, especially at the aisle side of aircraft seats because the minimum aisle width required is reduced at lower heights (e.g. below 25"). A further problem with this solution is that the deployed tray may be accidentally moved to the stowed or a partially stowed state by movement of the passenger. A still further disadvantage is that, when deployed, an aperture is left in the front of the console, through which unwanted material could be pushed thereby jamming the tray mechanism.

International patent application WO 2009/052596 discloses an example of an aircraft interior table that is stowed horizontally on an armrest.

It would be desirable to provide an improved tray assembly that mitigates the problems outlined above.

### SUMMARY OF THE INVENTION

Accordingly a first aspect of the invention provides a seating unit as claimed in claim 1.

Preferably, in the stowed state the tray is located with an enclosure provided in the console, typically at the top of the console. Preferably, said deployment means is arranged such that the tray is higher when in the deployed state than when in the stowed state. To this end, the deployment means may comprise one or more support arms, or other support means, coupled to the tray and to the console, the support being movable into an out of an extended state in which it projects upwardly away from said console, typically from a side of said console adjacent said seat and preferably obliquely. Where the console includes said enclosure, at least part of the support, e.g. an anchor portion, is conveniently located in the enclosure when the tray is stowed. The coupling between the support and one or both of the console and the tray is typically a pivotable coupling, in particular a coupling that allows pivotable movement about a respective axis that is substantially horizontal and extending in a fore-and-aft direction.

Preferably, said deployment means is arranged to invert the tray between the stowed and deployed states. Conveniently, this is achieved by said support and said pivotable couplings between the support and the console and between the support and the tray. The preferred arrangement is such that deployment of the tray comprises a first aspect in which said support moves to adopt its extended state and a second aspect in which said tray is pivoted with respect to the support until it adopts its deployed state. According to the invention, said deployment means is arranged to allow movement of said tray in a fore-and-aft direction when in the deployed state. To this end, the preferred coupling between the tray and the support arm (or other support to the console) comprises a linkage that is pivotably coupled to said support at a first location and pivotably coupled to said tray at a second location, said first and second locations being laterally, i.e. transversely across the seat, spaced-apart when the tray is deployed and, typically, located within the perimeter of the tray. Conveniently, said first location is at or adjacent a side of said tray that is adjacent said console when deployed and said first location is at or adjacent an opposite side of said tray. The linkage preferably comprises first and second links, each being pivotably coupled to said support and said tray, typically at a respective end, to allow pivoting movement about a respective vertical axis when the tray is deployed. The respective couplings of said links at said first and second locations are advantageously spaced apart. The preferred linkage comprises a parallelogram linkage. Preferably, one or both of said links are bent or curved, advantageously at opposite ends.

Advantageously, the linkage is disposed in a plane that is substantially parallel with, or coincident with, the plane in which the tray is disposed. Preferably, the linkage is provided in an aperture or recess formed in the body of the tray.

Preferably, means for guiding movement of the tray are provided, said guide means being co-operable with said linkage. Said guide means preferably includes a respective portion for limiting movement of said tray in said fore-and-aft directions by engagement with one or other or both of said linkages. Said guide means preferably also includes means for causing said tray to be movable substantially in said fore and aft directions. Conveniently, said guide means is provided by one or more edges or walls of a recess or aperture in which said linkage is located. Preferably, said means for causing said tray to be movable substantially in said fore and aft directions comprises a curved edge or wall that engages with said linkage at or adjacent said first location.

Preferably, said deployment means is arranged to allow said tray to pivot about a substantially vertical axis when in the deployed state. Preferably, the arrangement is such that said tray is pivotable about said substantially vertical axis when in the deployed state and only when in its foremost position. This is conveniently achieved by arrangement of the linkage and the guide means. The preferred arrangement is such that, when the deployed tray is not in its foremost position, the inter-engagement of the linkage and the guide means (in particular said curved edge) causes a pushing action on tray away from a seated passenger to result in the tray moving towards said foremost position and substantially in said fore-and-aft direction. Once said foremost position is reached, the inter-engagement of the linkage and the guide means prevents further outward movement of the tray but allows pivoting movement of the tray.

In preferred embodiments, the tray is a foldable multi-leaf tray. The deployment means is conveniently coupled to the leaf that is located adjacent the console when deployed.

In preferred embodiments, said seating unit comprises an aircraft seating unit and may be incorporated into a row of like seating units for an aircraft. Seating units embodying the invention may alternatively be used in other vehicles.

In preferred embodiments the tray is stored horizontally within a seat arm or console between or beside passenger places. The stowed tray may be covered when not in use by a hinged lid on the seat arm or console. The tray assembly is preferably attached to a support arm which is in turn attached to the seat arm or console structure, so that the tray is deployed by rotation of the tray and support arm about longitudinal axes so that the tray is rotated through approximately 180° from its stowed orientation.

Advantageously, the geometry of the support arm and its mating components is arranged so that the deployed position of the tray is at a suitable height and angle for use by the passenger.

Advantageously, the tray is coupled to the support arm via a linkage arranged so that the tray can be adjusted fore-and-aft while remaining substantially parallel to its stowed and initially deployed orientations. Preferably, said linkage comprises a parallel motion linkage arranged so as to allow a further rotational motion of the deployed tray about a vertical axis.

In some embodiments, the assembly is arranged so that the tray is stowable within, and deployable from, an enclosure in a vehicle seat arm or console, in a substantially horizontal orientation with its working surfaces at the bottom, i.e. facing downwardly towards the floor of the vehicle, and covered when not in use by the console lid. The tray is attached to the console/arm rest structure via one or more support arms which allow the tray to be deployed out of the enclosure after the console lid has been opened. The support arm, the means for connecting it to the console structure and the tray are arranged so that moving each element to the end of its available deployment motion causes the tray to arrive at a suitable position and height for use by a passenger in the seat. At the tray end of the support arm there is a linkage mechanism that allows adjustment of the fore-and-aft position of the tray and the linkage is arranged so that when the tray is adjusted to its most forward in-line position it can be further moved by rotation about a substantially vertical axis thereby opening a space which can be used by the passenger to leave the seat without needing to stow the tray.

A further aspect of the invention provides a tray assembly for a console adjacent a seat, the tray assembly comprising a tray and means for deploying the tray between a stowed state, in which the tray is substantially horizontally disposed on the console, and a deployed state in which the tray is substantially horizontally disposed and extending across said seat, characterised in that said deploying means is configured to enable said tray to pivot into and out of said stowed state about at least one horizontal axis disposed, in use, in the fore-and-aft direction of the seat

Preferred features of the invention are recited in the dependent claims, and further advantageous aspects of the invention will become apparent to those skilled in the art upon review of the following description of a specific embodiment and with reference to the accompanying drawings.

In the following description, the term "horizontal" is intended to mean substantially parallel with the floor of the vehicle. The "fore-and-aft direction" is intended to refer to an axis substantially along which a seated passenger faces, and may or may not coincide with the main (longitudinal) axis of the vehicle depending on how the seats are aligned with the axis of the vehicle.

### BRIEF DESCRIPTION OF THE DRAWINGS

An embodiment of the invention is now described by way of example and with reference to the accompanying drawings in which:
Figure 1 shows a ¾ perspective view of the front of a seat suitable for use with a tray assembly embodying the invention;
Figure 2 shows a ¾ perspective view from the rear of the seat of Figure 1;
Figure 3 shows a ¾ perspective view of a portion of a console, or armrest, of a seat, with the console lid opened, exposing a tray assembly embodying the invention;
Figure 4 shows a ¾ perspective view of the console with the tray deployed and the console lid closed, the decorative laminate from the top of the tray lower leaf not being shown to allow the mechanism within the leaf to be visible;
Figure 5 shows a ¾ perspective view similar to that of Figure 4 but with the decorative laminate in place and the console lid opened;
Figure 6 shows a sequence of views, each view representing a stage of the deployment and operation of the tray assembly; and
Figure 7 shows some of the views of Figure 6 in enlarged view.

### DETAILED DESCRIPTION OF THE DRAWINGS

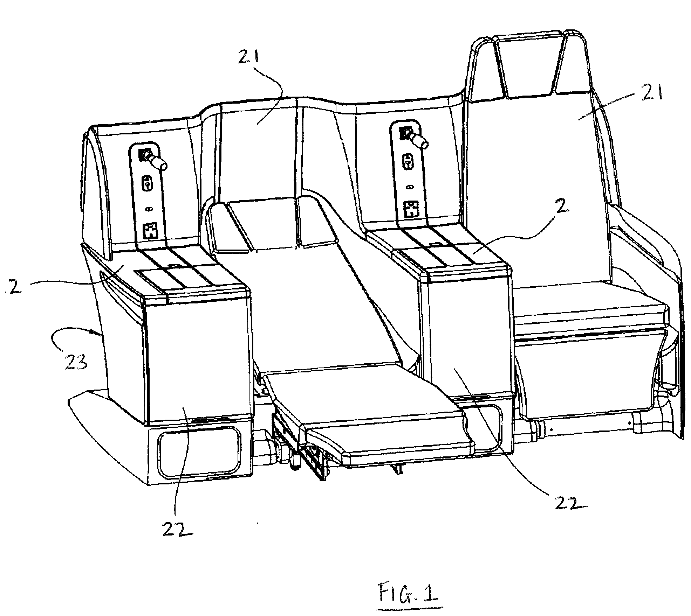

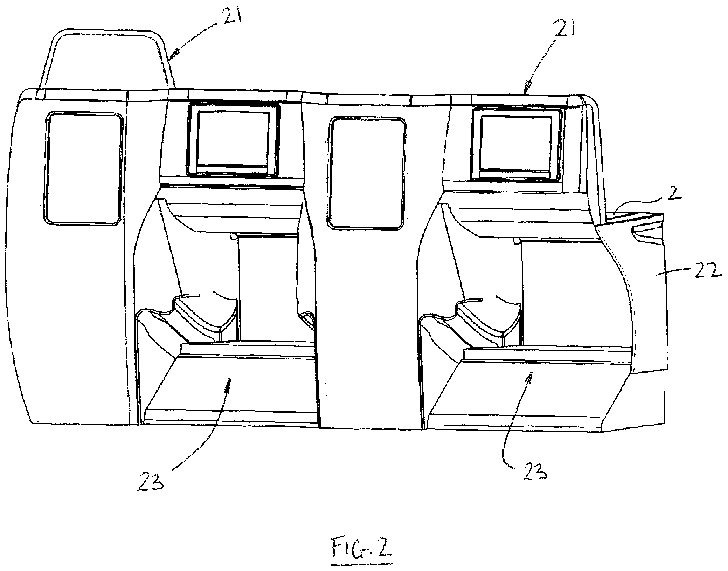

Figures 1 and 2 illustrate, by way of example only, a row of seats 21 (only two shown although the row may comprise any number of seats) with which tray assemblies embodying the present invention are suitable for use. Adjacent seats 21 are separated by a console 22 (which may also be regarded as an armrest), the console 22 being hollow to define a footwell 23 for a rearward seat (not shown). To this end, the seats are staggered laterally with respect to seats in forward and/or rearward rows so that each seat is aligned with a respective footwell. The seats 21 are typically reclinable into the respective footwell, especially such that the seat can serve as a bed, in which case the seat preferably provides a substantially horizontal sleeping platform when in its reclined state. The illustrated seats 21 are aircraft seats, although the invention is not limited to use with aircraft seating.

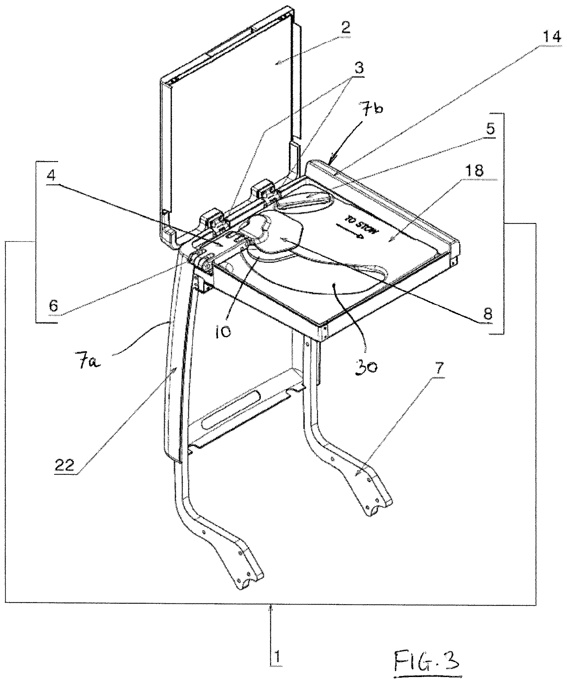

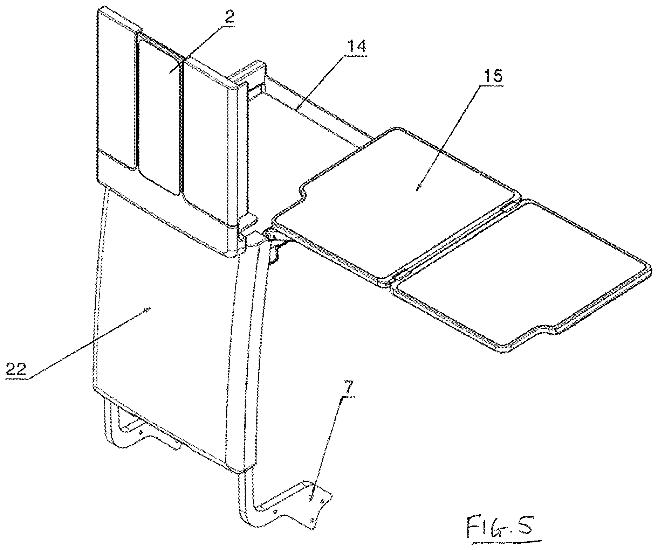

Referring now in particular to Figures 3 to 7, there is described a preferred tray assembly, generally indicated as 1, embodying the invention. The tray assembly 1 is deployable from a compartment, or enclosure 14, provided in the console 22. The console 22 typically comprises a support structure 7 with a front fascia 7a and a top portion 7b. The space below the top portion 7b and behind the fascia 7a serves as a footwell 23. So as not to occupy space that is better used as part of the footwell 23, the enclosure 14 is advantageously provided at the top of the console 22 and is shaped and dimensioned to store the tray 1 in a substantially horizontal disposition. However, it is also desirable to keep the overall height of the console 22 at a level where its top surface can comfortably be used as an armrest by a seated passenger. To this end the tray assembly 1 is relatively slim when stowed, as is described in more detail below.

In the preferred embodiment, the tray assembly 1 includes a tray 13, 18 that is of a multi-leaf, preferably a bi-fold, i.e. two leaf, design so as to fit a larger tray area within the available console width than would be possible with a single leaf tray. The tray includes a first, or upper, leaf 13 and a second, or lower, leaf 18. The leaves 13, 18 are coupled together such that they are foldable onto one another. This may be achieved by one or more (two in this example) hinges 12, although any other suitable coupling may be used. A lid 2 for the enclosure 14 is provided, the lid providing the top surface of the console 22 when closed. Advantageously, the lid 2 is coupled, preferably hinged, to the console 22 at its forward end. In the illustrated embodiment, two hinges 3 are provided for this purpose, although any number of hinges could alternatively be used. When stowed, the leaves 13, 18 adopt a folded state and are disposed substantially parallel with the floor (an orientation which is assumed to be substantially horizontal for the purposes of the present description).

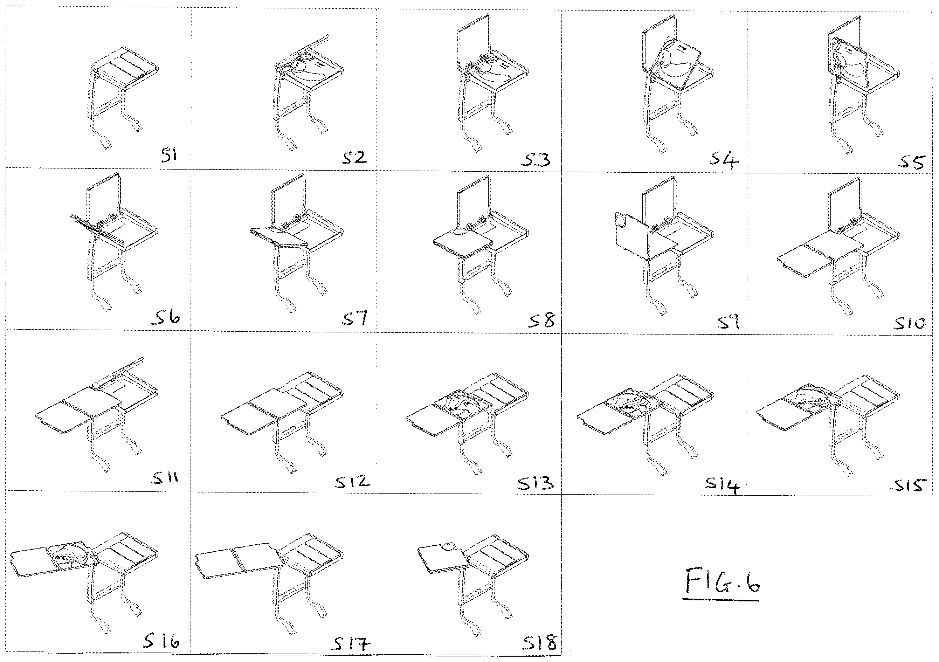

The tray 13, 18 is pivotably coupled to the console 22 at the side of the stowed tray, and of the console, that is closest to the respective seat across which the tray is to be deployed. The coupling is such that it allows the tray 13, 18 to be pivoted about a substantially horizontal axis running in the fore-and-aft direction, i.e. substantially parallel with the direction in which a seated passenger faces. Hence, when the lid 2 is open, the tray 13, 18 may be deployed by an initial pivoting movement about the horizontal axis (see Figure 6, steps S4 to S8). This results in the tray 13, 18 being lifted upwardly out of its enclosure 14 in the initial stage of deployment and rotated through more than 90°, and preferably approximately 180°, with respect to a horizontal axis from its stowed position. By arranging the tray assembly to be deployable in this manner, the tray is relatively stable when deployed since it cannot easily be accidentally returned to its stowed position by unintentional engagement with the passenger. Also, the enclosure 14 from which the tray is deployed has a horizontally disposed opening for allowing the tray to pass into and out of the enclosure 14, which can be closed by the lid 2 and so prevent egress of unwanted material when the tray is deployed. In preferred embodiments, the rotation of the tray with respect to horizontal is performed in more than one stage, each stage involving pivoting the tray about a respective horizontal fore-and-aft axis, the overall rotation of the tray caused by the stages amounting to approximately 180° about a horizontal axis. The respective pivot axes are parallel but vertically spaced apart and this allows the deployed tray to be higher than the stowed tray. It will be understood that these movements described above in relation to deployment apply in reverse when the tray is being stowed.

For example, as is described in more detail hereinafter, the tray may be pivotably coupled to one or more support arm which is in turn pivotably coupled to the console 22, so that the tray is deployed (and stowed) by rotation of the tray and support arm about longitudinal axes so that the tray is rotated through approximately 180° between its stowed and deployed orientations.

In the preferred embodiment, the tray assembly 1 is coupled to an anchor block 6, which itself is fixed to the seat console structure 7. A support arm 4 is pivotally connected at a first, or lower, end to the anchor block 6. At least part of the anchor block 6 and the connected end of the support arm 4 are arranged to protrude through an aperture in the enclosure 14. This allows the console lid 2 to be closed after deployment of the tray assembly 1. The support arm 4 is pivotable about a substantially horizontal axis that runs substantially in the fore-and-aft direction. In cases where the seats 21 are not aligned such that a seated passenger faces in the fore or aft direction, e.g. where rows of seats extend diagonally with respect to the fore-and-aft direction, said axis runs substantially parallel with the direction in which a seated passenger faces.

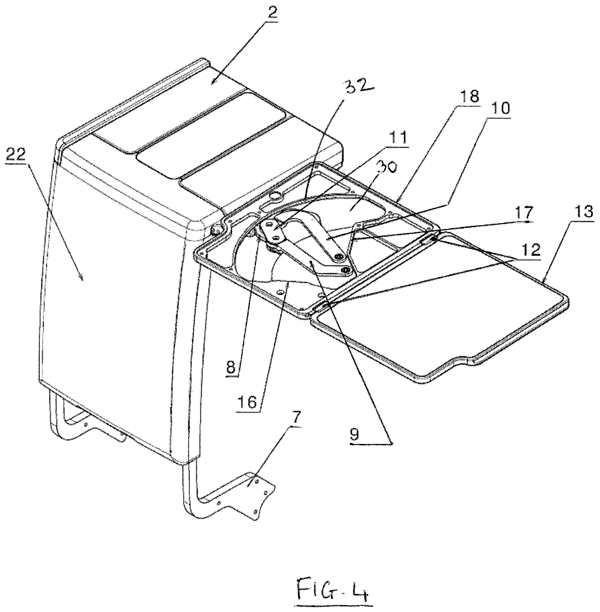

The tray 13, 18 is coupled to the arm 4 by means of a pivotable linkage assembly which, in the preferred embodiment, comprises a base pivot 8, a first, or forward, link 9 and a second, or aft, link 10. The linkage assembly is arranged to allow the tray 13, 18 to pivot with respect to the arm 4 about an axis that is substantially parallel with the axis about which the arm 4 can pivot with respect to the anchor block 6. The pivot assembly is also arranged to allow the tray 13, 18 to move with respect to the arm 4 in a plane that is substantially parallel with a plane in which said axis lies, i.e. a substantially horizontal plane as viewed in Figures 3 and 4.

In the illustrated embodiment, the other, or upper, end of the support arm 4 is pivotally coupled to the base pivot 8 such that the base pivot can pivot with respect to the arm 4 about an axis that is substantially parallel with the axis about which the arm 4 can pivot with respect to the anchor block 6. Each of the forward and aft links 9, 10 is pivotably coupled to the base pivot 8, typically at a respective first end. The coupling is such that the links 9, 10 are capable of pivoting about an axis that is substantially perpendicular with the axis about which the base pivot 8 can pivot with respect to the arm 4, and more particularly an axis that is substantially vertical when the table is fully deployed. Preferably, said coupling of the links 9, 10 to the base pivot 8 is implemented at respective spaced apart locations. At their support arm ends the forward 9 and aft links 10 may be retained by a cover plate 11.

Each link 9, 10 is pivotably coupled to the tray, and in particular the lower leaf 18, at a location distal the coupling to the base pivot 8, typically at the respective opposite end. The coupling is such that the links 9, 10 are capable of pivoting about an axis that is substantially perpendicular with the axis about which the base pivot 8 can pivot with respect to the arm 4, and more particularly an axis that is substantially vertical when the table is fully deployed. Preferably, said coupling of the links 9, 10 to the tray is implemented at respective spaced apart locations.

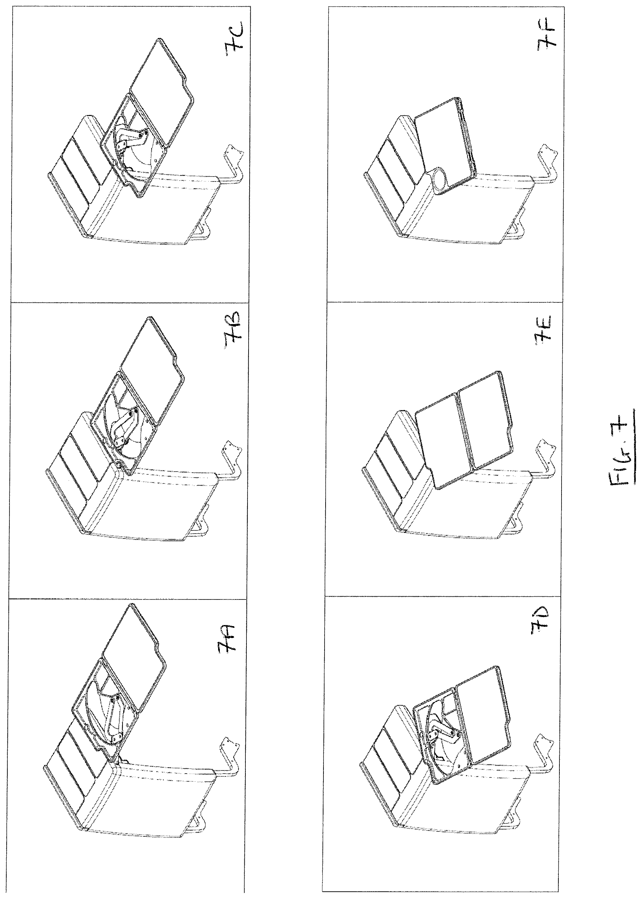

Guide means are provided on the leaf 18 for limiting the movement of the leaf 18 and the links 9, 10 with respect to one another. In the preferred embodiment, the guide means comprises a channel or recess 30 formed in the leaf 18. In the preferred embodiment, the recess 30 takes the form of an aperture through the leaf 18. The links 9, 10 are located within the aperture 30 and being engagable with one or more edges of the aperture. In particular, the link 9 is engagable with a first edge 16 of the aperture 30 to limit movement of the tray in the aft direction (see Fig. 7A). The link 10 is engagable with a second edge 17 of the aperture 30 to limit movement of the tray in the fore direction (see Fig. 7C). Movement of the tray in the fore-and-aft direction may be guided by interaction of the linkage with a third, and preferably curved, edge 32 of the aperture 30. Conveniently, the third edge 32 is arranged to engage with the linkage at or adjacent the respective first ends of the links 9, 10. The preferred arrangement is such that pivoting movement of the links 9, 10 at their second ends causes interaction between the curved edge 32 and the other end of the linkage that guides the tray to move substantially in the fore-and-aft direction (at least until the limits of travel in the fore or aft direction are reached).

Advantageously, the aperture 30 is shaped to allow the tray to pivot about a vertical axis when deployed and in the foremost position (see Fig. 7D in comparison with Fig. 7C). This pivoting movement may be limited by interference between the links 9, 10.

It will be seen that the preferred linkage takes the form of a parallelogram linkage, although it is further preferred that the links of the parallelogram are bent at opposite ends to provide the desired range of movement of the tray.

Advantageously, the links 9, 10 and the aperture 30 lie in substantially the same plane, which itself is parallel or coincident with the major plane of the leaf 18. Hence, the linkage is compact and can readily be accommodated by a shallow enclosure 14. It is particularly advantageous that the linkage is incorporated into the body of the leaf 18.

Referring now in particular to Figure 6, when the console lid 2 is opened through 90° (step S1 to step S3 of Figure 6) the tray assembly 1, support arm 4 and deployment mechanism are visible within the enclosure. The surfaces immediately visible are those which will be on the underside of the tray when it is fully deployed. A handle 5 (Fig. 3) is provided on the lower leaf 18, preferably located near the front edge of the lower leaf 18, which may be used to lift the tray out of the enclosure 14.

The tray assembly 1 is moved from the enclosure by lifting with the handle 5, which causes the support arm 4 to rotate about its pivot with the anchor block 6 (step S4 to step S6 of Figure 6). The anchor block 6 and support arm 4 have mutually engagable features, e.g. abutments (not shown), which restrict the support arm 4 movement so that the support arm 4 rotation is completed (step S7 of Figure 6) before the tray assembly 1 reaches its fully deployed (horizontal) orientation.

From this position, the base pivot 8 may rotate about is pivoted joint with respect to the support arm 4. The support arm 4 and base pivot 8 are conveniently arranged with mutually engagable features, e.g. abutments (not shown), that cause, when engaged, the tray assembly 1 to be substantially horizontally orientated (step S8 of Figure 6) when the base pivot 8 has used all of its available rotation with respect to its pivoted joint with the support arm 4.

The upper tray leaf 13 may now be opened (step S9 and step S10 of Figure 6) to provide the maximum tray surface to the passenger. The height of the tray assembly 1 in its deployed position relative to its stowed position is determined by the length of the support arm 4 and the arrangement of the mutually engaging features on the support arm 4, the anchor block 6 and the base pivot 8 which limit the angular movement available at the pivoted connections. Advantageously, the arrangement is such that the deployed tray is higher than the top of the console 22.

With the tray assembly 1 deployed, it is possible for the console lid 2 to be closed (step S11 and step S12 of Figure 6). The forward 9 and aft links 10 and the cover plate 11 may be hidden from passenger view by an infill panel 15 (not shown in step S13 to step S16 of Figure 6) fitted to the upper surface of the lower leaf 18.

The tray assembly position may be adjusted in a fore-and-aft direction. In its initially deployed position the tray is at the aft end of its range of travel (step S13 of Figure 6 and Figure 7A). This is defined by the shape of the forward link 9 and the corresponding aperture feature 16 within the lower tray leaf 18. A passenger can increase the space between his body and the rear of the tray by pushing the tray assembly 1 forward. This is facilitated by the forward 9 and aft links 10 which allow the tray assembly 1 to move forward without changing its angle with respect the rest of the seat (step S14 of Figure 6, and Figures 7B and 7C). The extent of the forward travel is limited by the shape of the aft link 10 and the corresponding aperture feature 17 within the lower tray leaf 18. In the preferred embodiment, the link 10 and edge 17 engage when all four pivots of the forward 9 and aft links 10 are aligned in a substantially straight line (step S15 of Figure 6 and Figure 7C). If the passenger attempts to push the tray assembly forward past this point the tray assembly can rotate about the outer pivot of either link, which opens a space to one side of the seat which may be used for egress from the seat without the necessity to stow the tray (step S16 to step S18 of Figure 6 and Figure 7D). Stowing of the tray is achieved simply by reversing the sequence of movements already described.

The invention is not limited to the embodiment described herein, which may be modified or varied without departing from the scope of the attached claims.

## Claims

1. A seating unit comprising a seat (21), a console (22) adjacent the seat and a tray assembly (1), the tray assembly comprising a tray (13, 18) and means for deploying the tray between a stowed position, in which the tray is substantially horizontally disposed on the console, and a deployed position in which the tray is substantially horizontally disposed and extending across said seat, said deploying means being configured to enable said tray to pivot into and out of said stowed position about at least one substantially horizontal axis disposed substantially in the fore-and-aft direction of the seat, **characterised in that** said deploying means comprises a support (4, 6) between the tray and the console, and a coupling between the tray and the support, the coupling comprising a linkage (8, 9, 10) that is pivotably coupled to said support at a first location and pivotably coupled to said tray at a second location, said first and second locations being laterally spaced-apart when the tray is deployed, and wherein said coupling is arranged to allow movement of said tray in a fore-and-aft direction when in the deployed state.

2. A seating unit as claimed in claim 1, wherein said deploying means (4, 6, 8, 9, 10) pivotably couples said tray (13, 18) to said console (22) at a side of said tray, when stowed, that is adjacent said seat (21), the coupling providing said pivotable movement about said at least one substantially horizontal axis.

3. A seating unit as claimed in any preceding claim, wherein said deploying means (4, 6, 8, 9, 10) is arranged to pivot said tray (13, 18) through in total approximately 180° between the stowed and deployed positions about said at least one substantially horizontal axis.

4. A seating unit as claimed in any preceding claim, wherein said deploying means (4, 6, 8, 9, 10) is configured to enable said tray (13, 18) to pivot into and out of said stowed position about first and second substantially horizontal axes disposed substantially in said fore-and-aft direction, said first and second axes being vertically spaced apart from one another.

5. A seating unit as claimed in any preceding claim, wherein said support (4, 6) includes at least one support member (4) extending between the tray (13, 18) and the console (22), said at least one support member being pivotably coupled to the console to enable pivoting movement of theat least one support member and the tray with respect to the console about a first substantially horizontal axis disposed substantially in said fore-and-aft direction.

6. A seating unit as claimed in claim 5, wherein said at least one support member (4) is pivotably coupled to the tray (13, 18) to enable pivoting movement of the tray with respect to the at least one support member (4) about a second substantially horizontal axis disposed substantially in said fore-and-aft direction.

7. A seating unit as claimed in any preceding claim, further comprising an enclosure (14) for receiving said tray (13, 18) when in the stowed position, said enclosure being located on top of said console (22), said enclosure defining an opening for the ingress and egress of said tray, said opening facing upwardly and wherein a lid is provided for closing said opening.

8. A seating unit as claimed in claim 8 when dependent on claim 6, wherein said at least one support member (4) includes an anchor portion (6) by which said at least one support member is anchored to the console (22), said anchor portion being located inside said enclosure (14), said enclosure being shaped to define, when said lid is closed, an aperture through which part of said at least one support member extends.

9. A seating unit as claimed in claim 8, wherein said at least one support member (4) includes an arm portion (4) pivotably coupled to said anchor portion (4) at a location outside of said enclosure (14), said anchor portion extending though said aperture, and said arm portion extending through said aperture when said tray is in its stowed position.

10. A seating unit as claimed in any preceding claim, wherein said tray (13, 18) comprises a plurality of foldable tray leaves (13, 18), said tray being foldable between a folded state, in which said leaves are folded onto one another, and an and unfolded state, in which said leaves are unfolded to provide a multi-leaf tray surface.

11. A seating unit as claimed in any preceding claim, wherein said deployment means is arranged to allow movement of said tray (13, 18) in said fore-and-aft direction when in the deployed state by means of a coupling between the tray and said support (4, 6) that comprises said linkage (8, 9, 10) pivotably coupled to said at least one support member (4) at a first location and pivotably coupled to said tray at a second location, said first and second locations being laterally spaced-apart when said tray is in its deployed position, and said pivotable couplings allowing pivoting movement about at least one respective substantially vertical axis.

12. A seating unit as claimed in claim 11, wherein said linkage (8, 9, 10) comprises a parallelogram linkage having first and second bent links (9, 10).

13. A seating unit as claimed in claim 12, wherein said linkage (8, 9, 10) is co-operable with guide means (30) provided on said tray (13, 18), said guide means being engagable with said linkage to determine the movement of the tray with respect to the console (22) when the tray is in its deployed state.

14. A seating unit as claimed in claim 13 , wherein said guide means (30) and said linkage (8, 9, 10) are arranged to allow, though mutual inter-engagement, said tray (13, 18) to move, when deployed, between an aftmost position and a foremost position with respect to said seat (21), the movement being substantially in said fore-and-aft direction.

15. A seating unit as claimed in claim 13 or 14, wherein said linkage (8, 9, 10) and said guide means (30) are arranged to allow, through mutual inter-engagement, said tray (13, 18) to pivot about a substantially vertical axis when in the deployed state.

## Patentansprüche

1. Sitzeinheit mit einem Sitz (21), einer Konsole (22) neben dem Sitz und einer Klapptischbaugruppe (1), die einen Klapptisch (13, 18) und ein Mittel zum Klappen des Klapptischs zwischen einer Verstauposition, in der er im Wesentlichen horizontal auf der Konsole angeordnet ist, und einer Ausklappposition umfasst, in der er im Wesentlichen horizontal angeordnet ist und sich quer über den Sitz hinweg erstreckt, wobei das Klappmittel so konfiguriert ist, dass es dem Klapptisch ein Verschwenken in die und aus der Verstauposition um mindestens eine im Wesentlichen horizontale Achse ermöglicht, die im Wesentlichen in Längsrichtung des Sitzes angeordnet ist, **dadurch gekennzeichnet, dass** das Klappmittel zwischen dem Klapptisch und der Konsole einen Träger (4, 6) und zwischen dem Klapptisch und dem Träger ein Verbindungsstück umfasst, wobei das Verbindungsstück ein Gestänge (8, 9, 10) umfasst, das an einer ersten Stelle schwenkbar mit dem Träger und an einer zweiten Stelle schwenkbar mit dem Klapptisch verbunden ist, wobei die erste und die zweite Stelle seitlich voneinander beabstandet sind, wenn der Klapptisch ausgeklappt ist, und wobei das Verbindungsstück so angeordnet ist, dass es eine Bewegung des Klapptischs in Längsrichtung im ausgeklappten Zustand zulässt.

2. Sitzeinheit nach Anspruch 1, wobei das Klappmittel (4, 6, 8, 9, 10) den Klapptisch (13, 18) an einer Seite des verstauten Klapptischs, die sich neben dem Sitz (21) befindet, schwenkbar mit der Konsole (22) verbindet, wobei das Verbindungsstück für die Schwenkbewegung um die mindestens eine im Wesentlichen horizontale Achse sorgt.

3. Sitzeinheit nach einem vorhergehenden Anspruch, wobei das Klappmittel (4, 6, 8, 9, 10) so angeordnet ist, dass es den Klapptisch (13, 18) zwischen der Verstauposition und der Ausklappposition um insgesamt etwa 180° um die mindestens eine im Wesentlichen horizontale Achse verschwenkt.

4. Sitzeinheit nach einem vorhergehenden Anspruch, wobei das Klappmittel (4, 6, 8, 9, 10) so konfiguriert ist, dass es dem Klapptisch (13, 18) ein Verschwenken in die und aus der Verstauposition um eine erste und eine zweite im Wesentlichen horizontale Achse ermöglicht, die im Wesentlichen in Längsrichtung angeordnet sind, wobei die erste und die zweite Achse vertikal voneinander beabstandet sind.

5. Sitzeinheit nach einem vorhergehenden Anspruch, wobei der Träger (4, 6) mindestens ein Trägerelement (4) aufweist, das sich zwischen dem Klapptisch (13, 18) und der Konsole (22) ersteckt, wobei das mindestens eine Trägerelement schwenkbar so mit der Konsole verbunden ist, dass eine Schwenkbewegung des mindestens einen Trägerelements und des Klapptischs in Bezug auf die Konsole um eine erste im Wesentlichen horizontale Achse möglich ist, die im Wesentlichen in Längsrichtung angeordnet ist.

6. Sitzeinheit nach Anspruch 5, wobei das mindestens eine Trägerelement (4) schwenkbar so mit dem Klapptisch (13, 18) verbunden ist, dass eine Schwenkbewegung des Klapptischs in Bezug auf das mindestens eine Trägerelement (4) um eine zweite im Wesentlichen horizontale Achse möglich ist, die im Wesentlichen in Längsrichtung angeordnet ist.

7. Sitzeinheit nach einem vorhergehenden Anspruch, die ferner ein Gehäuse (14) zum Aufnehmen des Klapptischs (13, 18) in der Verstauposition umfasst, wobei sich das Gehäuse oben auf der Konsole (22) befindet, wobei das Gehäuse eine Öffnung für den Eintritt und den Austritt des Klapptischs definiert, die nach oben weist, und wobei ein Deckel zum Schließen der Öffnung vorgesehen ist.

8. Sitzeinheit nach Anspruch 8 [*sic*] bei Abhängigkeit von Anspruch 6, wobei das mindestens eine Trägerelement (4) einen Verankerungsabschnitt (6) aufweist, über den es an der Konsole (22) verankert ist, wobei sich der Verankerungsabschnitt innerhalb des Gehäuses (14) befindet, wobei das Gehäuse so geformt ist, dass es bei geschlossenem Deckel einen Ausschnitt definiert, durch den sich ein Teil des mindestens einen Trägerelements erstreckt.

9. Sitzeinheit nach Anspruch 8, wobei das mindestens eine Trägerelement (4) einen Armabschnitt (4) aufweist, der an einer Stelle außerhalb des Gehäuses (14) schwenkbar mit dem Verankerungsabschnitt (4) verbunden ist, wobei sich der Verankerungsabschnitt durch den Ausschnitt erstreckt und sich der Armabschnitt durch den Ausschnitt erstreckt, wenn sich der Klapptisch in seiner Verstauposition befindet.

10. Sitzeinheit nach einem vorhergehenden Anspruch, wobei der Klapptisch (13, 18) mehrere klappbare Klapptischplatten (13, 18) umfasst und sich zwischen einem zusammengeklappten Zustand, in dem die Platten zusammengeklappt sind, und einem auseinandergeklappten Zustand klappen lässt, in dem die Platten auseinandergeklappt sind und so eine mehrteilige Klapptischfläche bilden.

11. Sitzeinheit nach einem vorhergehenden Anspruch, wobei das Klappmittel so angeordnet ist, dass es mithilfe eines Verbindungsstücks zwischen dem Klapptisch und dem Träger (4, 6), welches das Gestänge (8, 9, 10) umfasst, das an einer ersten Stelle schwenkbar mit dem mindestens einen Trägerelement (4) und an einer zweiten Stelle schwenkbar mit dem Klapptisch verbunden ist, eine Bewegung des Klapptischs (13, 18) im ausgeklappten Zustand in Längsrichtung zulässt, wobei die erste und die zweite Stelle seitlich voneinander beabstandet sind, wenn sich der Klapptisch in seiner Ausklappposition befindet, und wobei die schwenkbaren Verbindungsstücke eine Schwenkbewegung um mindestens eine entsprechende im Wesentlichen vertikale Achse zulassen.

12. Sitzeinheit nach Anspruch 11, wobei das Gestänge (8, 9, 10) ein Parallelogrammgestänge mit einem ersten und einem zweiten gekrümmten Verbindungsglied (9, 10) umfasst.

13. Sitzeinheit nach Anspruch 12, wobei das Gestänge (8, 9, 10) mit einem Führungsmittel (30) an dem Klapptisch (13, 18) zusammenwirken kann, wobei sich das Führungsmittel mit dem Gestänge in Eingriff bringen lässt und so die Bewegung des Klapptischs in Bezug auf die Konsole (22) bestimmt, wenn sich der Klapptisch im ausgeklappten Zustand befindet.

14. Sitzeinheit nach Anspruch 13, wobei das Führungsmittel (30) und das Gestänge (8, 9, 10) so angeordnet sind, dass sie durch gegenseitige Ineingriffnahme ein Bewegen des ausgeklappten Klapptischs (13, 18) zwischen einer hintersten und einer vordersten Position in Bezug auf den Sitz (21) zulassen, wobei die Bewegung im Wesentlichen in Längsrichtung erfolgt.

15. Sitzeinheit nach Anspruch 13 oder 14, wobei das Gestänge (8, 9, 10) und das Führungsmittel (30) so angeordnet sind, dass sie durch gegenseitige Ineingriffnahme ein Verschwenken des Klapptischs (13, 18) um eine im Wesentlichen vertikale Achse im ausgeklappten Zustand zulassen.

## Revendications

1. Unité de siège comportant un siège (21), une console (22) adjacente par rapport au siège et un ensemble formant plateau (1), l'ensemble formant plateau comportant un plateau (13, 18) et un moyen servant à déployer le plateau entre une position repliée, dans laquelle le plateau est disposé sensiblement à l'horizontale sur la console, et une position déployée dans laquelle le plateau est disposé sensiblement à l'horizontale et s'étendant en travers dudit siège, ledit moyen de déploiement étant configuré pour permettre audit plateau de pivoter dans ladite et hors de ladite position repliée autour d'au moins un axe sensiblement horizontal disposé sensiblement dans la direction avant/arrière du siège, **caractérisée en ce que** ledit moyen de déploiement comporte un support (4, 6) entre le plateau et la console, et un accouplement entre le plateau et le support, l'accouplement comportant une tringlerie (8, 9, 10) qui est accouplée de manière pivotante audit support au niveau d'un premier emplacement et accouplée de manière pivotante audit plateau au niveau d'un deuxième emplacement, lesdits premier et deuxième emplacements étant espacés l'un par rapport à l'autre dans le sens latéral quand le plateau est déployé, et dans laquelle ledit accouplement est agencé pour permettre le mouvement dudit plateau dans une direction avant/arrière quand il est dans l'état déployé.

2. Unité de siège selon la revendication 1, dans laquelle ledit moyen de déploiement (4, 6, 8, 9, 10) accouple de manière pivotante ledit plateau (13, 18) à ladite console (22) au niveau d'un côté dudit plateau, quand il est replié, qui est adjacent par rapport audit siège (21), l'accouplement procurant ledit mouvement de pivotement autour dudit au moins un axe sensiblement horizontal.

3. Unité de siège selon l'une quelconque des revendications précédentes, dans laquelle ledit moyen de déploiement (4, 6, 8, 9, 10) est agencé pour faire pivoter ledit plateau (13, 18) sur au total approximativement 180° entre les positions repliée et déployée autour dudit au moins un axe sensiblement horizontal.

4. Unité de siège selon l'une quelconque des revendications précédentes, dans laquelle ledit moyen de déploiement (4, 6, 8, 9, 10) est configuré pour permettre audit plateau (13, 18) de pivoter dans ladite et hors de ladite position repliée autour de premier et deuxième axes sensiblement horizontaux disposés sensiblement dans ladite direction avant/arrière, lesdits premier et deuxième axes étant espacés à la verticale l'un par rapport à l'autre.

5. Unité de siège selon l'une quelconque des revendications précédentes, dans laquelle ledit support (4, 6) comprend au moins un élément de support (4) s'étendant entre le plateau (13, 18) et la console (22), ledit au moins un élément de support étant accouplé de manière pivotante à la console pour permettre le mouvement de pivotement dudit au moins un élément de support et du plateau par rapport à la console autour d'un premier axe sensiblement horizontal disposé sensiblement dans ladite direction avant/arrière.

6. Unité de siège selon la revendication 5, dans laquelle ledit au moins un élément de support (4) est accouplé de manière pivotante au plateau (13, 18) pour permettre le mouvement de pivotement du plateau par rapport audit au moins un élément de support (4) autour d'un deuxième axe sensiblement horizontal disposé sensiblement dans ladite direction avant/arrière.

7. Unité de siège selon l'une quelconque des revendications précédentes, comportant par ailleurs un coffret (14) servant à recevoir ledit plateau (13, 18) quand il est dans la position repliée, ledit coffret étant situé sur ladite console (22), ledit coffret définissant une ouverture pour l'entrée et la sortie dudit plateau, ladite ouverture étant orientée vers le haut et dans laquelle un couvercle est mis en oeuvre pour fermer ladite ouverture.

8. Unité de siège selon la revendication 8 [*sic*] dépendante de la revendication 6, dans laquelle ledit au moins un élément de support (4) comprend une partie formant dispositif d'ancrage (6) au moyen de laquelle ledit au moins un élément de support est ancré à la console (22), ladite partie formant dispositif d'ancrage étant située à l'intérieur dudit coffret (14), ledit coffret étant façonné pour définir, quand ledit couvercle est fermé, un orifice au travers duquel une partie dudit au moins un élément de support s'étend.

9. Unité de siège selon la revendication 8, dans laquelle ledit au moins un élément de support (4) comprend une partie formant accoudoir (4) accouplée de manière pivotante à ladite partie formant dispositif d'ancrage (4) au niveau d'un emplacement à l'extérieur dudit coffret (14), ladite partie formant dispositif d'ancrage s'étendant au travers dudit orifice, et ladite partie formant accoudoir s'étendant au travers dudit orifice quand ledit plateau est dans sa position repliée.

10. Unité de siège selon l'une quelconque des revendications précédentes, dans laquelle ledit plateau (13, 18) comporte une pluralité de battants de plateau pliables (13, 18), ledit plateau étant pliable entre un état plié, dans lequel lesdits battants sont pliés les uns sur les autres, et un état non plié, dans lequel lesdits battants sont dépliés pour mettre en oeuvre une surface de plateau à multiples battants.

11. Unité de siège selon l'une quelconque des revendications précédentes, dans laquelle ledit moyen de déploiement est agencé pour permettre le mouvement dudit plateau (13, 18) dans ladite direction avant/arrière quand il est dans l'état déployé au moyen d'un accouplement entre le plateau et ledit support (4, 6) qui comporte ladite tringlerie (8, 9, 10) accouplée de manière pivotante audit au moins un élément de support (4) au niveau d'un premier emplacement et accouplée de manière pivotante audit plateau au niveau d'un deuxième emplacement, lesdits premier et deuxième emplacements étant espacés l'un par rapport à l'autre dans le sens latéral quand ledit plateau est dans sa position déployée, et lesdits accouplements en mesure de pivoter permettant le mouvement de pivotement autour d'au moins un axe sensiblement vertical respectif.

12. Unité de siège selon la revendication 11, dans laquelle ladite tringlerie (8, 9, 10) comporte une tringlerie en parallélogramme ayant des première et deuxième liaisons courbées (9, 10).

13. Unité de siège selon la revendication 12, dans laquelle ladite tringlerie (8, 9, 10) est en mesure de coopérer avec un moyen de guidage (30) mis en oeuvre sur ledit plateau (13, 18), ledit moyen de guidage étant en mesure de se mettre en prise avec ladite tringlerie pour déterminer le mouvement du plateau par rapport à la console (22) quand le plateau est dans son état déployé.

14. Unité de siège selon la revendication 13, dans laquelle ledit moyen de guidage (30) et ladite tringlerie (8, 9, 10) sont agencés pour permettre, par une mise en prise mutuelle, audit plateau (13, 18) de se déplacer, quand il est déployé, entre une position le plus à l'arrière et une position le plus à l'avant par rapport audit siège (21), le mouvement étant sensiblement dans ladite direction avant/arrière.

15. Unité de siège selon la revendication 13 ou la revendication 14, dans laquelle ladite tringlerie (8, 9, 10) et ledit moyen de guidage (30) sont agencés pour permettre, par une mise en prise mutuelle, audit plateau (13, 18) de pivoter autour d'un axe sensiblement vertical quand il est dans la position déployée.
